# EUROPEAN PATENT APPLICATION

(11) **EP 3 598 894 A1**
(43) Date of publication of application: **29.01.2020**
(21) Application number: 19187712.5
(22) Date of filing: 23.07.2019
(51) Int. Cl.: A01K 61/17, B65G 47/14

(54) **SOFT SPHERICAL OBJECT CONVEYING APPARATUS AND METHOD FOR CONVEYING SOFT SPHERICAL OBJECTS**

(30) Priority: 26.07.2018 JP 2018140549
(71) Applicant: Sinfonia Technology Co., Ltd., Tokyo 105-8564 (JP)
(72) Inventor: KOTO, Saori, Minato-ku, Tokyo 105-8564 (JP); NAKANISHI, Akira, Minato-ku, Tokyo 105-8564 (JP)
(74) Representative: TBK

(57) **Abstract**

In the case where fish eggs are conveyed by a conveying gear having a peripheral part provided with a plurality of housing recesses each housing one fish egg, in a water tank into which the fish eggs are introduced, the fish eggs are prevented from being pinched and crushed between the peripheral part of the conveying gear and a guide member when the fish eggs move to the housing recesses. A fish-egg conveying apparatus according to the present invention includes: a water tank (8) into which at least one fish egg is introduced; a conveying gear (61) that rotates in the water tank (8) and has a peripheral part provided with a plurality of housing recesses housing each one of the fish eggs; a guide member (63) disposed along part of the peripheral part of the conveying gear (61) in the water tank (8); and a removing roller (64) that rotates on an upstream side of the guide member (63) in the water tank (8) in a rotation direction of the conveying gear (61), such that a part of the removing roller (64) opposed to the peripheral part of the conveying gear (61) moves in a direction away from the guide member (63).

## Description

### CROSS-REFERENCE TO RELATED APPLICATIONS

This application claims priority of Japanese Patent Applications No. 2018-140549 filed on July 26, 2018. The contents of the applications are incorporated herein by reference in their entirety.

### BACKGROUND OF THE INVENTION

### Field of the Invention

The present invention relates to a soft spherical object conveying apparatus that conveys soft spherical objects such as fish eggs in a water tank and to a method for conveying soft spherical objects.

### Description of the Related Art

It is known that the use of eggs of small-sized fish such as zebrafish is useful in the technical field in which target substances such as recombinant proteins are produced using genetic engineering techniques by injecting genes into fertilized eggs. For example, when zebrafish are used to obtain a target substance, a gene solution (vector) needs to be precisely injected into a spherical fertilized egg having a diameter of 0.9 mm to 1.3 mm. There is a known microinjection technique in which, in order to prevent damages to fertilized eggs, a gene solution is injected by penetrating the egg membrane of a fertilized egg with an extremely thin needle having a tip with a diameter of several to several dozens of micrometers, and inserting the needle tip into the embryo.

In this field, microinjection work using a manipulator, or the like, to prevent hand movement due to manual work or manual operation is generally employed; however, it is difficult to process fertilized eggs in an amount required to acquire the practical quantity of target substances, and the accuracy and the stability of an injection process are also limited. Therefore, various attempts have been made to achieve automation as in Japanese Patent No. 5647005, Japanese Patent No. 5823112, and Japanese Patent No. 5787432.

However, the above-described fertilized eggs frequently undergo cell division, for example, at intervals of about 30 minutes, and therefore, in order to rapidly introduce a gene and obtain a desired fertilized egg, it is intended that a fertilized egg is processed with higher efficiency. Specifically, the related arts disclosed in the above patent documents are based on the assumption of what is called batch processing in which the processing speed is restricted due to the use of a predetermined container, or the like, and therefore fertilized eggs are not processed in a state suitable for processing on a constant basis.

Therefore, the inventor of the present invention has studied a method for conveying fish eggs enabling predetermined processing to be performed on fish eggs with higher efficiency, and has found out that, by disposing, in a water tank into which fish eggs are introduced, a conveying rotary member having a plurality of housing recesses on the periphery thereof, and guiding the fish eggs to the housing recesses of the conveying rotary member, predetermined processing can be performed with higher efficiency on the fish eggs positioned in the housing recesses.

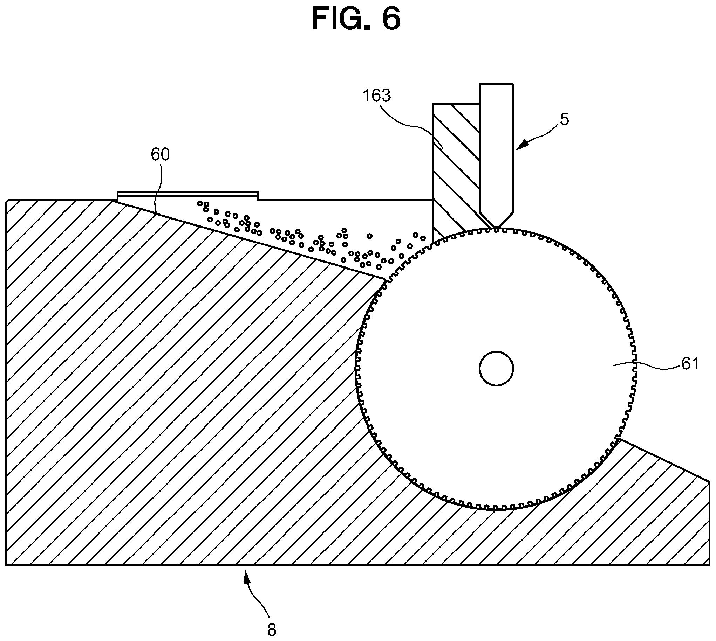

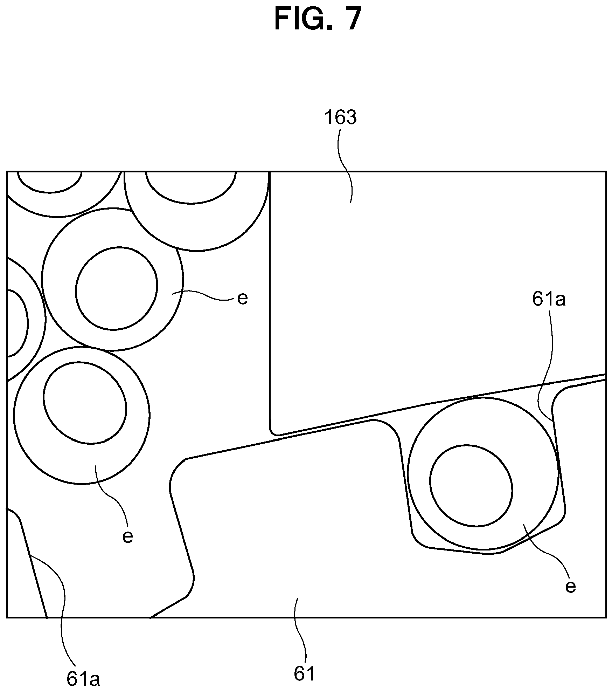

Specifically, as illustrated in FIGS. 6 and 7, a conveying gear 61 that intermittently rotates is disposed inside a water tank 8 filled with water up to the vicinity of the upper end thereof, and a gene injection unit 5 is arranged above the water tank 8. In order to house the fish eggs e, the inner thickness dimension of the water tank 8 is set to a dimension such that a plurality of the fish eggs e not allowed to lie side by side. A peripheral part of the conveying gear 61 is provided with a plurality of housing recesses 61a housing each one of the fish eggs. Therefore, the fish eggs e introduced into the water tank 8 are guided to the peripheral part of the conveying gear 61 by a guide 60, and the fish eggs e are supplied to the housing recesses 61a of the conveying gear 61 one by one. The gene injection unit 5 injects a gene solution into the fish egg e separated and conveyed one by one by the housing recess 61a of the conveying gear 61.

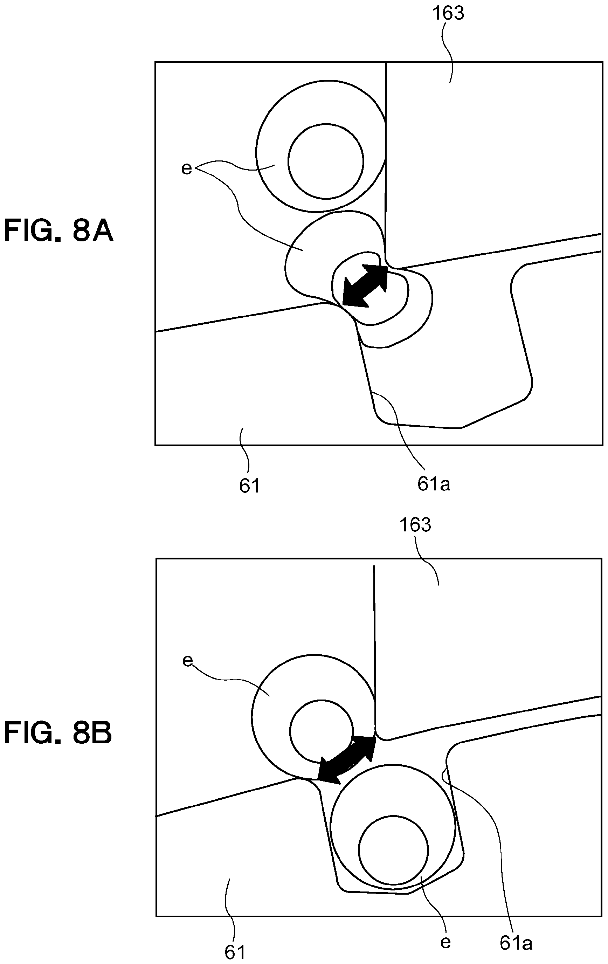

It is considered that a guide member 163 is fixed above the conveying gear 61 in the water tank 8 to prevent the two or more fish eggs e from entering the single housing recess 61a of the conveying gear 61 and prevent the fish egg e having entered the housing recess 61a from jumping out. However, when the fish egg e moves to the housing recess 61a of the conveying gear 61, there is a problem in that the fish egg e is caught and crushed between a tooth tip of the conveying gear 61 and the guide member 163 in an area where the distance between the tooth tip of the conveying gear 61 and the guide member 163 is short as illustrated in FIG. 8A. Further, there is a problem in that the fish egg e is caught and crushed between the tooth tip of the conveying gear 61 and the guide member 163 when the fish egg e moves into the housing recess 61a in which another fish egg e has already entered as illustrated in FIG. 8B.

Therefore, the present invention has been made in view of the above problems and an object thereof is to provide a soft spherical object conveying apparatus and a method for conveying a soft spherical object, with which it is possible to prevent a soft spherical object, such as a fish egg, from being caught and crushed between a conveying rotary member such as a conveying gear, and a guide member when the soft spherical object is supplied to a housing recess of the conveying rotary member.

### SUMMARY OF THE INVENTION

The present invention takes the following measures in order to solve the above problems.

That is, a soft spherical object conveying apparatus according to the present invention includes: a water tank into which at least one soft spherical object is introduced; a conveying rotary member that rotates in the water tank and has a peripheral part provided with a plurality of housing recesses housing each one of the soft spherical objects; a guide member disposed along part of the peripheral part of the conveying rotary member in the water tank; and a removing roller that rotates on an upstream side of the guide member in the water tank in a rotation direction of the conveying rotary member, such that a part of the removing roller opposed to the peripheral part of the conveying rotary member moves in a direction away from the guide member.

In the soft spherical object conveying apparatus according to the present invention, the removing roller rotates on the upstream side of the guide member in the water tank in the rotation direction of the conveying rotary member, whereby water flow is formed in the area where soft spherical objects are supplied to the peripheral part of the conveying rotary member in the water tank so that the soft spherical objects not housed in the housing recesses of the conveying rotary member are prevented from moving to the area where the peripheral part of the conveying rotary member and the outer peripheral surface of the removing roller are located close to each other. Furthermore, in the area where soft spherical objects are supplied to the peripheral part of the conveying rotary member, the soft spherical objects are brought into contact with the outer peripheral surface of the removing roller, whereby the soft spherical objects not housed in the housing recesses of the conveying rotary member are prevented from moving to the area where the peripheral part of the conveying rotary member and the outer peripheral surface of the removing roller are located close to each other. Therefore, it is possible to prevent the soft spherical object from being caught and crushed between the peripheral part of the conveying rotary member and the guide member when the soft spherical object moves to the housing recess of the conveying rotary member.

In the soft spherical object conveying apparatus according to the present invention, a protrusion and a recess are formed on an outer peripheral surface of the removing roller.

In the soft spherical object conveying apparatus according to the present invention, water flow is easily formed in the water tank as the removing roller rotates. Furthermore, by the soft spherical object contacting the outer peripheral surface of the removing roller, the soft spherical object easily moves in a direction away from the peripheral part of the conveying rotary member. Therefore, the soft spherical object can be effectively prevented from being caught and crushed between the peripheral part of the conveying rotary member and the guide member.

In the soft spherical object conveying apparatus according to the present invention, a plurality of grooves extending along a thickness direction of the removing roller are formed on the outer peripheral surface of the removing roller.

In the soft spherical object conveying apparatus according to the present invention, the soft spherical object can be more effectively prevented from being caught and crushed between the peripheral part of the conveying rotary member and the guide member.

In the soft spherical object conveying apparatus according to the present invention, the conveying rotary member intermittently rotates so as to alternately repeat a rotating state and a stopped state, and the removing roller continuously rotates.

In the soft spherical object conveying apparatus according to the present invention, since the removing roller continuously rotates while the conveying rotary member intermittently rotates, the soft spherical objects are easily supplied one by one to the housing recesses of the conveying rotary member in the water tank.

In the soft spherical object conveying apparatus according to the present invention, when the conveying rotary member is in the stopped state, a straight line passing through a rotation center of the conveying rotary member and a rotation center of the removing roller in a side view passes a part of the peripheral part of the conveying rotary member where the housing recess is not provided.

In the soft spherical object conveying apparatus according to the present invention, the area in which the peripheral part of the conveying rotary member and the outer peripheral surface of the removing roller are located close to each other is a wedge-shaped area, and therefore, the water flow formed in the water tank by the rotation of the removing roller can effectively prevent the soft spherical objects not housed in the housing recesses of the conveying rotary member from moving to the area where the peripheral part of the conveying rotary member and the outer peripheral surface of the removing roller are located close to each other.

A method for conveying a soft spherical object according to the present invention includes the steps of: conveying, in a water tank into which at least one soft spherical object is introduced, the soft spherical object by rotating a conveying rotary member having a peripheral part provided with a plurality of housing recesses housing and conveying the soft spherical object; and rotating a removing roller, disposed close to the peripheral part of the conveying rotary member, at a rotation velocity corresponding to a rotation velocity of the conveying rotary member such that a part of the removing roller opposed to the peripheral part of the conveying rotary member moves in a direction opposite to a movement direction of the peripheral part of the conveying rotary member.

In the method for conveying a soft spherical object according to the present invention, the water flow formed in the water tank by the rotation of the removing roller can prevent the soft spherical object from moving to the area where the peripheral part of the conveying rotary member and the outer peripheral surface of the removing roller are located close to each other.

The method for conveying the soft spherical object according to the present invention includes the steps of: conveying, in a water tank into which at least one soft spherical object is introduced, the soft spherical object by rotating a conveying rotary member having a peripheral part provided with a plurality of housing recesses housing and conveying the soft spherical object; and forming water flow in a direction opposite to a movement direction of the peripheral part of the conveying rotary member by using a removing unit disposed close to the peripheral part of the conveying rotary member.

In the method for conveying the soft spherical object according to the present invention, water flow is formed in a direction opposite to the movement direction of the peripheral part of the conveying rotary member in the area close to the peripheral part of the conveying rotary member in the water tank, whereby the soft spherical objects not housed in the housing recesses of the conveying rotary member are prevented from moving to the area where the peripheral part of the conveying rotary member and the outer peripheral surface of the removing roller are located close to each other. Thus, it is possible to prevent the soft spherical object from being caught and crushed between the peripheral part of the conveying rotary member and the guide member when the soft spherical object moves to the housing recess of the conveying rotary member.

Thus, according to the present invention described above, it is possible to prevent a soft spherical object from being caught and crushed between the peripheral part of the conveying rotary member and the guide member when the soft spherical object moves to the housing recess of the conveying rotary member.

### BRIEF DESCRIPTION OF THE DRAWINGS

FIG. 1 is a schematic configuration explanatory view of a gene injection system provided with a fish-egg conveying apparatus according to an embodiment of the present invention;
FIG. 2 is a schematic plan view of a gene injection unit and a water tank in the gene injection system of FIG. 1;
FIG. 3 is a schematic configuration explanatory view of the fish-egg conveying apparatus in the gene injection system of FIG. 1;
FIG. 4 is a partially enlarged view of the fish-egg conveying apparatus of FIG. 3;
FIG. 5 is a view illustrating an area where fish eggs are supplied to a peripheral part of a conveying gear in the fish-egg conveying apparatus of FIG. 3;
FIG. 6 is a schematic configuration explanatory view of a fish-egg conveying apparatus according to a comparative example of the present invention;
FIG. 7 is a view illustrating an area where fish eggs are supplied to a peripheral part of a conveying gear in the fish-egg conveying apparatus of FIG. 6; and
FIG. 8A and 8B are views for explaining a technical problem of the fish-egg conveying apparatus of FIG. 6.

### DETAILED DESCRIPTION OF THE EMBODIMENTS

An embodiment of the present invention is explained below with reference to the drawings.

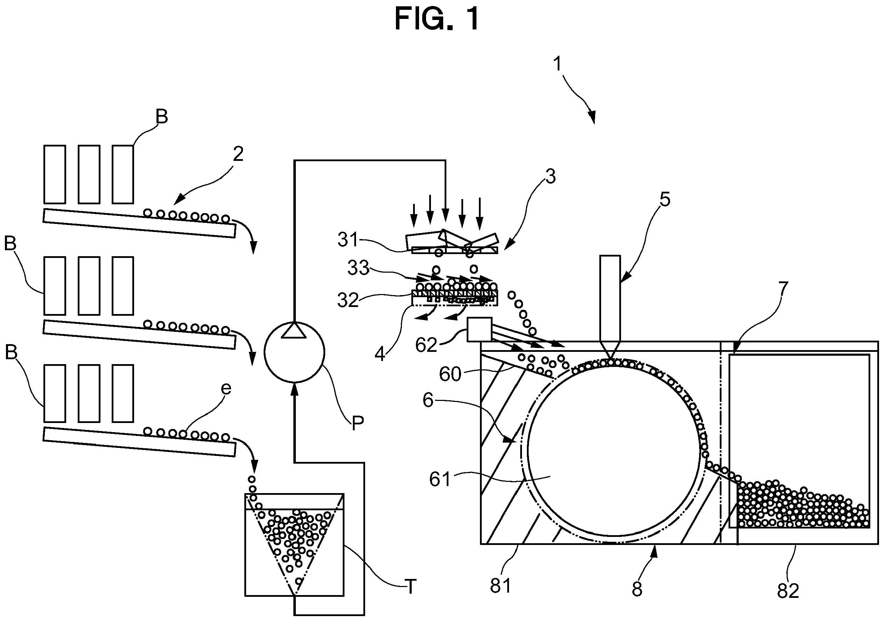

As illustrated in FIG. 1, a gene injection system 1 including a fish-egg conveying apparatus 6 according to the present embodiment is used to promptly introduce a gene solution containing a gene, which is a predetermined substance, into each of fertilized eggs, which are fish eggs e collected from a breeding water tank B. Then, in the fish egg e into which the gene solution has been injected, cell division is repeated and a protein derived from the base sequence of the introduced gene is synthesized. Then, the protein is collected, extracted, and purified in appropriate timing and is used for, for example, drug development study and mass production.

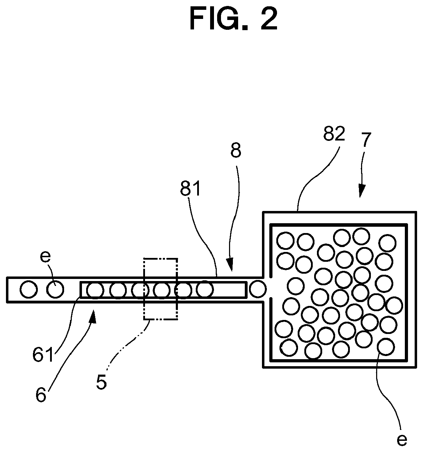

As illustrated in FIGS. 1 and 2, the gene injection system 1 includes: a collected-egg conveying unit 2 that is continuous to the breeding water tank B; an unnecessary-material separating unit 3 that separates the conveyed fish eggs e from unnecessary materials such as breeding water, excrement, or remaining food; a vibration conveying unit 4 that conveys, mainly by vibration, the fish eggs e separated from the unnecessary materials; the fish-egg conveying apparatus 6 that conveys the fish eggs e conveyed by the vibration conveying unit 4, while arranging the fish eggs e in rows in a predetermined state; the gene injection unit 5 that injects the gene solution into each of the fish eggs e conveyed by the fish-egg conveying apparatus 6; and a selection and collection unit 7 for efficiently collecting the fish egg e into which the gene solution has been injected.

According to the present embodiment, a zebrafish egg having substantially a spherical shape with a diameter of approximately 1 mm is used as an example of the fish egg e. Furthermore, since fish is a vertebrate, a protein in the form that can be used for drug development is easily obtained by gene introduction, and in particular, zebrafish is known as the type with which the fish eggs e, which are fertilized eggs, are efficiently obtained from the breeding water tank B.

The configuration of each part of the gene injection system 1 is described below.

The collected-egg conveying unit 2 is, for example, a water-gutter shaped passage configured to have a sloped shape so as to efficiently collect the fish eggs e from the breeding water tanks B arranged in plurality in parallel and at multiple stages in a vertical direction. As well as the fish eggs e, the collected-egg conveying unit 2 simultaneously conveys, from the breeding water tanks B, the breeding water in which the fish is bred, and the fish eggs e and the breeding water are once stored in a tank T and then lifted by a pump P and guided to the unnecessary-material separating unit 3.

The unnecessary-material separating unit 3 includes: a first net device 31 that allows the fish eggs e to pass therethrough and collects and removes unnecessary materials larger than the fish eggs e; a second net device 32 that is supported by the vibration conveying unit 4 and has a mesh that does not allow the fish eggs e to pass therethrough; and a clean-water ejection unit 33 that ejects clean water to the fish eggs e in the second net device 32.

The vibration conveying unit 4 guides the fish eggs e to the water tank 8 by applying a predetermined vibration to the second net device 32. The fish eggs e to which the vibration is applied by the vibration conveying unit 4 are conveyed and introduced to the water tank 8 quickly and efficiently.

The fish-egg conveying apparatus 6 arranges, in rows, the fish eggs e introduced into a region 81 of the water tank 8 such that the fish eggs e are easily processed by the gene injection unit 5.

The gene injection unit 5 injects a gene solution into each of the fish eggs e conveyed by the fish-egg conveying apparatus 6.

The selection and collection unit 7 conducts capturing the fish egg e with a camera (not illustrated), determines whether gene injection has succeeded/failed by image processing, conveys the determined fish eggs e to a different route (not illustrated), and then efficiently collects the fish egg e into which a gene has been injected from the fish-egg conveying apparatus 6 to a region 82 of the water tank 8.

According to the present embodiment, the gene injection unit 5, the fish-egg conveying apparatus 6, and the selection and collection unit 7 are provided in the water tank 8. Specifically, the gene injection unit 5 is disposed above the water tank 8, and the fish-egg conveying apparatus 6 and the selection and collection unit 7 are disposed inside the water tank 8.

The water tank 8 includes: the region 81, the inner thickness dimension of which is set to a dimension such that a plurality of fish eggs e are not allowed to lie side by side in order to house the fish eggs e; and the region 82 for housing the fish eggs e on which predetermined processing has been performed. The water tank 8 has, in a planar view, substantially a T-shape in which the region 81 and the region 82 are connected. Further, the water tank 8 is filled with water up to the vicinity of the upper end thereof.

Here, the configuration of the fish-egg conveying apparatus 6 is described.

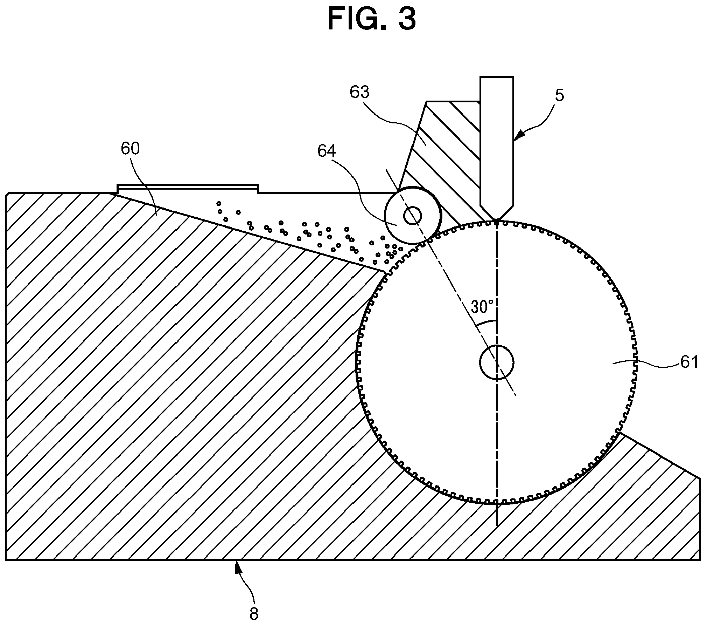

As illustrated in FIG. 3, the fish-egg conveying apparatus 6 includes: the conveying gear 61 to which the fish eggs e introduced into the water tank 8 are guided by the guide 60; an alignment pump 62 that ejects clean water toward the conveying gear 61; a guide member 63 disposed above the conveying gear 61; and a removing roller 64 that removes the fish eggs e from an area close to the guide member 63 in the peripheral part of the conveying gear 61. Therefore, the fish eggs e introduced into the region 81 are smoothly guided to the conveying gear 61 by clean water from the alignment pump 62.

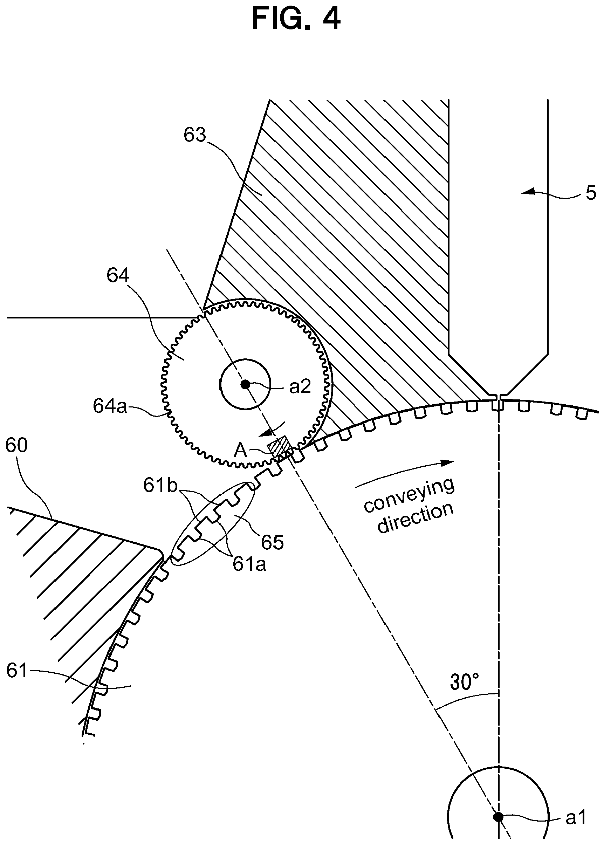

The conveying gear 61 is configured to be rotatable in the water tank 8 and has a plurality of the peripheral part provided with the housing recesses 61a housing each one of the fish egg e. The plurality of housing recesses 61a are provided at equal intervals in the circumferential direction in the peripheral part of the conveying gear 61. Therefore, in the peripheral part of the conveying gear 61, the housing recess 61a and the part where the housing recess 61a is not formed are alternately arranged. That is, as illustrated in FIG. 4, the 100 housing recesses 61a and 100 tooth tips 61b are alternately arranged in the peripheral part of the conveying gear 61. The size and the number of the housing recesses 61a formed in the peripheral part of the conveying gear 61 may be changed in accordance with the size, or the like, of the fish egg e. Further, in the water tank 8, the conveying gear 61 is disposed in the region 81, the dimension of which is set such that a plurality of fish eggs e are not allowed to lie side by side, and the thickness of the conveying gear 61 is, for example, about one third of the thickness of the region 81. Moreover, according to the present embodiment, the direction in which the fish egg e housed in the housing recess 61a of the conveying gear 61 moves, that is, the rotation direction of the conveying gear 61, is referred to as the conveying direction of the fish egg e (simply, the conveying direction) in some cases.

The guide member 63 is disposed along part of the peripheral part of the conveying gear 61 on the upstream side of the gene injection unit 5 in the conveying direction. The guide member 63 prevents the two or more fish eggs e from entering the single housing recess 61a of the conveying gear 61 and prevents the fish egg e having entered the housing recess 61a from jumping out. The part of the guide member 63 opposed to the peripheral part of the conveying gear 61 has substantially the same shape as the outer shape of the peripheral part of the conveying gear 61. A gap between the guide member 63 and the peripheral part of the conveying gear 61 is, for example, about one tenth of the diameter of the fish egg e, which is very small. Furthermore, the removing roller 64 is disposed on the upstream side of the guide member 63 in the conveying direction around the conveying gear 61. In a side view, the part of the guide member 63 opposed to the outer peripheral surface of the removing roller 64 has substantially the same shape as that of the outer peripheral surface of the removing roller 64. As illustrated in FIG. 4, the guide member 63 is disposed close to the peripheral part of the conveying gear 61 and the outer peripheral surface of the removing roller 64.

The removing roller 64 is disposed in the water tank 8 so as to be close to the peripheral part of the conveying gear 61 on the upstream side of the guide member 63 in the conveying direction. The removing roller 64 rotates such that a part (a part A in FIG. 4) opposed to the peripheral part of the conveying gear 61 moves in a direction away from the guide member 63. Specifically, at the position where the peripheral part of the conveying gear 61 is close to the outer peripheral surface of the removing roller 64, the peripheral part of the conveying gear 61 moves in the conveying direction, whereas the outer peripheral surface of the removing roller 64 moves in the direction opposite to the conveying direction. Projections and recesses are formed on the outer peripheral surface of the removing roller 64 by knurling. On the outer peripheral surface of the removing roller 64, a plurality of grooves 64a extending along the thickness direction thereof are formed. According to the present embodiment, projections and recesses are formed by knurling of, for example, flat module 0.2 and flat module 0.3; however, the type of knurling is not limited thereto.

The rotation of each of the conveying gear 61 and the removing roller 64 is precisely controlled by driving an AC servomotor via a motor driver. According to the present embodiment, the conveying gear 61 is controlled to intermittently rotate so as to alternately repeat a rotating state and a stopped state. That is, the conveying gear 61 is controlled to intermittently rotate such that the fish egg e positioned in the housing recess 61a is supplied to the gene injection unit 5. On the other hand, the removing roller 64 is controlled to continuously rotate. The removing roller 64 is controlled to continuously rotate at a predetermined rotation velocity. According to the present embodiment, as the rotation velocity of the removing roller 64 (the moving velocity (peripheral velocity) of the outer peripheral surface of the removing roller 64) corresponds to the rotation velocity of the conveying gear 61 (the moving velocity (peripheral velocity) of the outer peripheral surface of the conveying gear 61), the fish egg e is more properly supplied to the housing recess 61a of the conveying gear 61. It is noted that, although the conveying gear 61 intermittently rotates by alternately repeating the rotating state and the stopped state, the rotation velocity of the conveying gear 61 is the rotation velocity in the rotating state.

According to the present embodiment, the water flow formed in the water tank 8 by the rotation of the removing roller 64 can prevent the fish egg e from moving to an area where the peripheral part of the conveying gear 61 and the outer peripheral surface of the removing roller 64 are located close to each other, and the contact between the fish egg e and the outer peripheral surface of the removing roller 64 can prevent the fish egg e from moving to an area where the peripheral part of the conveying gear 61 and the outer peripheral surface of the removing roller 64 are located close to each other. In view of damages given to the fish eggs e, however, it is sometimes preferable that the fish eggs e are removed by the water flow without being in contact with the outer peripheral surface of the removing roller 64. As the rotation velocity of the conveying gear 61 in the water tank 8 increases, the amount of the fish eggs e in the water tank 8 and the amount of the conveyed fish eggs e increase. Therefore, there is a high possibility of contact with the outer peripheral surface of the removing roller 64. Thus, it is considered that the rotation velocity of the removing roller 64 is increased in accordance with an increase in the rotation velocity of the conveying gear 61, whereby the water flow formed by the removing roller 64 is increased.

As illustrated in FIG. 4, in a side view, the gene injection unit 5 is disposed vertically above a rotation center a1 of the conveying gear 61, while the removing roller 64 is disposed such that a straight line passing through a rotation center a2 of the removing roller 64 and the rotation center a1 of the conveying gear 61 is tilted at 30 degrees with respect to the vertical direction. FIG. 4 illustrates the stopped state when the conveying gear 61 is controlled to intermittently rotate; here, in a side view, the straight line passing through the rotation center a1 of the conveying gear 61 and the rotation center a2 of the removing roller 64 passes through the tooth tip 61b that is the part of the peripheral part of the conveying gear 61 where the housing recess 61a is not provided.

In the fish-egg conveying apparatus 6 according to the present embodiment, the fish eggs e introduced into the water tank 8 are guided on the guide 60 toward the conveying gear 61 due to a difference in the specific gravity between the water in the water tank 8 and the fish eggs e and the water flow of clean water ejected by the alignment pump 62, and the fish eggs e are supplied to the peripheral part of the conveying gear 61 in a fish-egg feeding area 65. Therefore, in the fish-egg feeding area 65 (the enclosed part in FIG. 4), the fish eggs e guided to the peripheral part of the conveying gear 61 are each housed in the single housing recess 61a of the conveying gear 61. That is, the fish-egg feeding area 65 is an area between the lower end part of the guide 60 and the removing roller 64. In the fish-egg feeding area 65, the fish eggs e are each housed in the single housing recess 61a of the conveying gear 61, and the fish egg e, which is not housed in the housing recess 61a, approaches the removing roller 64 in a state where the fish egg e is close to the peripheral part of the conveying gear 61. Furthermore, if the water flow formed by the removing roller 64 is too strong, the fish egg e comes out of the housing recess 61a of the conveying gear 61; therefore, the removing roller 64 is rotated at such a rotation velocity that the fish egg e housed in the housing recess 61a of the conveying gear 61 does not come out of the housing recess 61a.

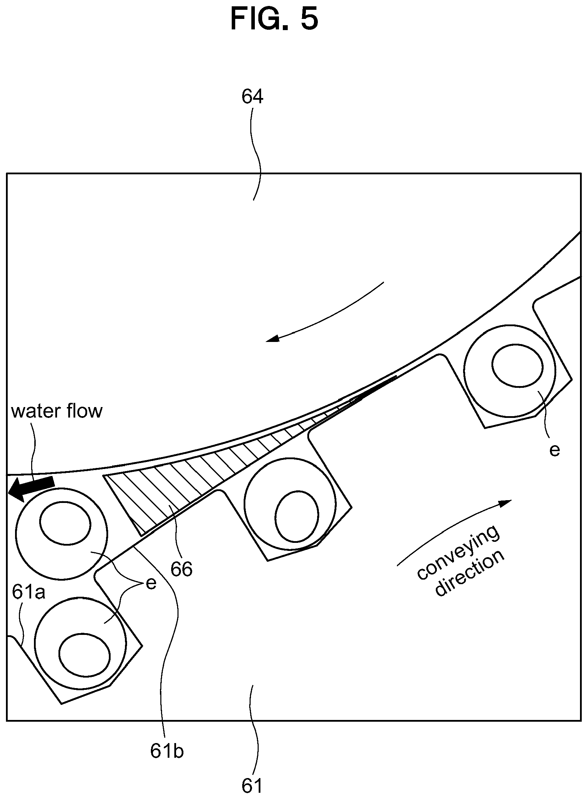

According to the present embodiment, by the rotation of the removing roller 64 in the water tank 8, water flow in a direction away from the guide member 63 is formed in the fish-egg feeding area 65 as illustrated in FIG. 5. In FIG. 5, the grooves 64a on the outer peripheral surface of the removing roller 64 are not illustrated. Therefore, the water flow in the direction away from the guide member 63 prevents the fish egg e from moving to an area 66 where the peripheral part of the conveying gear 61 and the outer peripheral surface of the removing roller 64 are located close to each other, e.g., the wedge-shaped area 66 where the distance between the peripheral part of the conveying gear 61 and the outer peripheral surface of the removing roller 64 is smaller than the diameter of the fish egg e. Thus, it is possible to convey the fish eggs e each housed in the single housing recess 61a of the conveying gear 61, to the gene injection unit 5 in a state where the fish eggs e not housed in the housing recesses 61a are removed by the removing roller 64, i.e., the fish eggs e not housed in the housing recess 61a are not present in the area 66.

That is, the fish-egg conveying apparatus 6 according to the present embodiment is characterized by including: the water tank 8 into which the fish eggs e are introduced; the conveying gear 61 that rotates in the water tank 8 and includes the peripheral part provided with the plurality of housing recesses 61a housing each one of the fish eggs e; the guide member 63 disposed along a part of the peripheral part of the conveying gear 61 in the water tank 8; and the removing roller 64 that rotates on the upstream side of the guide member 63 in the water tank 8 in the rotation direction of the conveying gear 61, such that the part opposed to the peripheral part of the conveying gear 61 moves in a direction away from the guide member 63.

In the fish-egg conveying apparatus 6 according to the present embodiment, the removing roller 64 rotates on the upstream side of the guide member 63 in the water tank 8 in the conveying direction (the upstream side in the rotation direction of the conveying gear 61), whereby water flow is formed in the area 65 where the fish egg e is supplied to the peripheral part of the conveying gear 61 in the water tank 8, and this prevents the fish egg e not housed in the housing recess 61a of the conveying gear 61 from moving to the area 66 where the peripheral part of the conveying gear 61 and the outer peripheral surface of the removing roller 64 are located close to each other. Further, in the area 65 where the fish egg e is supplied to the peripheral part of the conveying gear 61, the fish egg e is brought into contact with the outer peripheral surface of the removing roller 64, whereby the fish egg e not housed in the housing recess 61a of the conveying gear 61 is prevented from moving to the area 66 where the peripheral part of the conveying gear 61 and the outer peripheral surface of the removing roller 64 are located close to each other. Thus, it is possible to prevent the fish egg e from being caught and crushed between the peripheral part of the conveying gear 61 and the guide member 63 when the fish egg e moves to the housing recess 61a of the conveying gear 61.

The fish-egg conveying apparatus 6 according to the present embodiment is characterized in that projections and recesses are formed on the outer peripheral surface of the removing roller 64.

In the fish-egg conveying apparatus 6 according to the present embodiment, water flow is easily formed in the water tank 8 as the removing roller 64 rotates. Further, by the fish egg e contacting the outer peripheral surface of the removing roller 64, the fish egg e easily moves in a direction away from the peripheral part of the conveying gear 61. Thus, the fish egg e can be effectively prevented from being caught and crushed between the peripheral part of the conveying gear 61 and the guide member 63.

The fish-egg conveying apparatus 6 according to the present embodiment is characterized in that, on the outer peripheral surface of the removing roller 64, the plurality of grooves 64a extending along the thickness direction thereof are formed.

With the fish-egg conveying apparatus 6 according to the present embodiment, it is possible to more effectively prevent the fish egg e from being caught and crushed between the peripheral part of the conveying gear 61 and the guide member 63.

The fish-egg conveying apparatus 6 according to the present embodiment is characterized in that the conveying gear 61 intermittently rotates so as to alternately repeat a rotating state and a stopped state, and the removing roller 64 continuously rotates.

In the fish-egg conveying apparatus 6 according to the present embodiment, the removing roller 64 continuously rotates while the conveying gear 61 intermittently rotates, whereby the fish eggs e are each easily housed in the single housing recess 61a of the conveying gear 61 in the water tank 8.

The fish-egg conveying apparatus 6 according to the present embodiment is characterized in that, when the conveying gear 61 is in the stopped state, the straight line passing through the rotation center of the conveying gear 61 and the rotation center of the removing roller 64 in a side view passes through a part of the peripheral part of the conveying gear 61 where the housing recess 61a is not provided.

In the fish-egg conveying apparatus 6 according to the present embodiment, the area where the peripheral part of the conveying gear 61 and the outer peripheral surface of the removing roller 64 are located close to each other is a wedge-shaped area, whereby the water flow formed in the water tank 8 by the rotation of the removing roller 64 can effectively prevent the fish egg e not housed in the housing recess 61a of the conveying gear 61 from moving to the area 66 where the peripheral part of the conveying gear 61 and the outer peripheral surface of the removing roller 64 are located close to each other.

In the method for conveying a fish egg e according to the present embodiment, the fish eggs e are conveyed by rotating the conveying gear 61 having the peripheral part provided with the plurality of housing recesses 61a for housing and conveying the fish eggs e in the water tank 8 into which the fish eggs e are introduced, and the removing roller 64 disposed close to the peripheral part of the conveying gear 61 is rotated at the rotation velocity corresponding to the rotation velocity of the conveying gear 61 such that the part A of the removing roller 64 opposed to the peripheral part of the conveying gear 61 moves in the direction opposite to the movement direction of the peripheral part of the conveying gear 61.

In the method for conveying the fish egg e according to the present embodiment, the water flow formed in the water tank 8 by the rotation of the removing roller 64 can prevent the fish egg e from moving to the area 66 where the peripheral part of the conveying gear 61 and the outer peripheral surface of the removing roller 64 are located close to each other.

In the method for conveying the fish egg e according to the present embodiment, in the water tank 8 into which the fish eggs e are introduced, the fish eggs e are conveyed by rotating the conveying gear 61 having the peripheral part provided with the plurality of housing recesses 61a for housing and conveying the fish eggs e, and water flow is formed in the direction opposite to the movement direction of the peripheral part of the conveying gear 61 by the removing roller 64 disposed close to the peripheral part of the conveying gear 61.

In the method for conveying the fish eggs e according to the present embodiment, water flow is formed in the direction opposite to the movement direction of the peripheral part of the conveying gear 61 in the area close to the peripheral part of the conveying gear 61 in the water tank 8, whereby the fish egg e not housed in the housing recess 61a of the conveying gear 61 is prevented from moving to the area where the peripheral part of the conveying gear 61 and the outer peripheral surface of the removing roller 64 are located close to each other. Thus, it is possible to prevent the fish egg e from being caught and crushed between the peripheral part of the conveying gear 61 and the guide member 63 when the fish egg e moves to the housing recess 61a of the conveying gear 61.

Although the embodiment of the present invention has been described above, the present invention is not limited to the configuration according to the above-described embodiment.

For example, although the case where the fish egg e conveyed by the fish-egg conveying apparatus 6 is the fish egg e of zebrafish is explained in the above embodiment, eggs of different fish may be used. Moreover, the soft spherical object in the present invention is not limited to the fish egg e, but it may be soft spherical objects other than the fish eggs e. Therefore, the soft spherical objects in the present invention may be soft spherical objects such as artificial salmon roes, and the present invention is applicable to a conveying apparatus that conveys the soft spherical objects and that is configured to possibly allow the soft spherical objects to be caught and crushed between the peripheral part of the conveying gear and the guide member.

Although protrusions and recesses are formed on the outer peripheral surface of the removing roller 64 in the above embodiment, the outer peripheral surface of the removing roller 64 may not be provided with protrusions and recesses. Furthermore, although the case where the plurality of grooves 64a extending along the thickness direction of the removing roller 64 are formed on the outer peripheral surface of the removing roller 64 as the projections and recesses is explained in the above embodiment, the configuration of the protrusions and the recesses formed on the outer peripheral surface of the removing roller 64 is not limited thereto.

Although the case where the conveying gear 61 intermittently rotates and the removing roller 64 continuously rotates is explained in the above embodiment, this is not a limitation. Therefore, the removing roller 64 may intermittently rotate. Further, instead of rotating at a constant rotation velocity, the rotation velocity of the removing roller 64 may be changed. Therefore, the rotation velocity of the removing roller 64 may be changed depending on the size, specific gravity, and elasticity of the soft spherical object (e. g., fish egg).

In the case explained in the above embodiment, the conveying gear 61 intermittently rotates, and when the conveying gear 61 is in the stopped state, the straight line passing through the rotation center of the conveying gear 61 and the rotation center of the removing roller 64 in a side view passes through the part of the peripheral part of the conveying gear 61 where the housing recess 61a is not provided; however, the straight line passing through the rotation center of the conveying gear 61 and the rotation center of the removing roller 64 in a side view may pass through the part of the peripheral part of the conveying gear 61 where the housing recess 61a is provided.

Although the gene injection system (automatic microinjection apparatus) provided with the fish-egg conveying apparatus 6 is explained in the above embodiment, this is not a limitation. Therefore, the fish-egg conveying apparatus 6 according to the present invention is applicable to, for example, an apparatus for checking and selecting gene expression of an egg by using a fluorescent microscope or the like.

Although the fish-egg conveying apparatus that conveys fish eggs having a specific gravity larger than the specific gravity of the solvent (e.g., water) in the water tank 8 is explained in the above embodiment, the fish-egg conveying apparatus may convey fish eggs having a specific gravity smaller than the specific gravity of a solvent (e.g., seawater) in the water tank 8. In this case, by reversing the arrangement of the conveying gear 61 and the removing roller 64 in the vertical direction, fish eggs can be properly separated and conveyed.

Although the case where the conveying gear 61 having the housing recesses 61a on the peripheral part thereof is used as a conveying rotary member that conveys fish eggs one by one is explained in the above embodiment, the conveying rotary member that conveys fish eggs one by one is not limited to the conveying gear 61. Thus, the conveying rotary member that conveys fish eggs one by one may have, for example, a belt-like shape or a chain-like shape capable of forming an endless track, as long as the shape makes it possible to convey fish eggs one by one.

In the case explained in the above embodiment, the removing roller 64 is disposed, as a removing unit, in the area close to the peripheral part of the conveying gear 61 in the water tank 8 and water flow is formed in the direction opposite to the movement direction of the peripheral part of the conveying gear 61 by rotating the removing roller 64; however, the configuration of the removing unit for forming water flow in the direction opposite to the movement direction of the peripheral part of the conveying gear 61 in the area close to the peripheral part of the conveying gear 61 is not limited to the removing roller 64. Therefore, for example, an ejection unit that ejects water in the direction opposite to the movement direction of the peripheral part of the conveying gear 61 may be disposed, as a removing unit, in the area close to the peripheral part of the conveying gear 61, and water flow may be formed in the direction opposite to the movement direction of the peripheral part of the conveying gear 61 by ejecting water from the ejection unit.

Although the mode for introducing a gene into a fish egg is disclosed in the above embodiment, it is obviously possible to adopt a mode for injecting, into a fish egg, different substances from genes, e.g., cells such as human cancer cells, drugs, drug candidate substances, chemical substances such as toxic substances, or food additives such as seasonings or coloring agents. Further, the specific arrangement of individual components can be variously modified within the scope of the present invention.
- 6: fish-egg conveying apparatus
- 8: water tank
- 61: conveying gear (conveying rotary member)
- 61a: housing recess
- 63: guide member
- 64: removing roller
- 64a: groove
- a1: rotation center of conveying gear (rotation center of conveying rotary member)
- a2: rotation center of removing roller
- e: fish egg (soft spherical object)

In the case where fish eggs are conveyed by a conveying gear having a peripheral part provided with a plurality of housing recesses each housing one fish egg, in a water tank into which the fish eggs are introduced, the fish eggs are prevented from being pinched and crushed between the peripheral part of the conveying gear and a guide member when the fish eggs move to the housing recesses. A fish-egg conveying apparatus according to the present invention includes: a water tank 8 into which at least one fish egg is introduced; a conveying gear 61 that rotates in the water tank 8 and has a peripheral part provided with a plurality of housing recesses housing each one of the fish eggs; a guide member 63 disposed along part of the peripheral part of the conveying gear 61 in the water tank 8; and a removing roller 64 that rotates on an upstream side of the guide member 63 in the water tank 8 in a rotation direction of the conveying gear 61, such that a part of the removing roller 64 opposed to the peripheral part of the conveying gear 61 moves in a direction away from the guide member 63.

## Claims

1. A soft spherical object conveying apparatus comprising:
a water tank into which at least one soft spherical object is introduced;
a conveying rotary member that rotates in the water tank and has a peripheral part provided with a plurality of housing recesses housing each one of the soft spherical objects;
a guide member disposed along part of the peripheral part of the conveying rotary member in the water tank; and
a removing roller that rotates on an upstream side of the guide member in the water tank in a rotation direction of the conveying rotary member, such that a part of the removing roller opposed to the peripheral part of the conveying rotary member moves in a direction away from the guide member.

2. The soft spherical object conveying apparatus according to claim 1, wherein a protrusion and a recess are formed on an outer peripheral surface of the removing roller.

3. The soft spherical object conveying apparatus according to claim 2, wherein a plurality of grooves extending along a thickness direction of the removing roller are formed on the outer peripheral surface of the removing roller.

4. The soft spherical object conveying apparatus according to any one of claims 1 to 3, wherein the conveying rotary member intermittently rotates so as to alternately repeat a rotating state and a stopped state, and the removing roller continuously rotates.

5. The soft spherical object conveying apparatus according to claim 4, wherein, when the conveying rotary member is in the stopped state, a straight line passing through a rotation center of the conveying rotary member and a rotation center of the removing roller in a side view passes a part of the peripheral part of the conveying rotary member where the housing recess is not provided.

6. A method for conveying a soft spherical object comprising the steps of:
conveying, in a water tank into which at least one soft spherical object is introduced, the soft spherical object by rotating a conveying rotary member having a peripheral part provided with a plurality of housing recesses housing and conveying the soft spherical object; and
rotating a removing roller, disposed close to the peripheral part of the conveying rotary member, at a rotation velocity corresponding to a rotation velocity of the conveying rotary member such that a part of the removing roller opposed to the peripheral part of the conveying rotary member moves in a direction opposite to a movement direction of the peripheral part of the conveying rotary member.

7. A method for conveying a soft spherical object comprising the steps of:
conveying, in a water tank into which at least one soft spherical object is introduced, the soft spherical object by rotating a conveying rotary member having a peripheral part provided with a plurality of housing recesses housing and conveying the soft spherical object; and
forming water flow in a direction opposite to a movement direction of the peripheral part of the conveying rotary member by using a removing unit disposed close to the peripheral part of the conveying rotary member.
